# EUROPÄISCHE PATENTSCHRIFT

(11) **EP 4 329 986 B1**
(45) Veröffentlichungstag und Bekanntmachung des Hinweises auf die Patenterteilung: **04.06.2025**
(21) Anmeldenummer: 22722246.0
(22) Anmeldetag: 12.04.2022
(51) Int. Cl.: B25F 5/00

(54) **VERFAHREN ZUR AKTIVIERUNG UND ZUR DE-AKTIVIERUNG EINER SPINDELARRETIERUNG IN EINER WERKZEUGMASCHINE UND WERKZEUGMASCHINE**
MACHINE TOOL AND METHOD FOR ACTIVATING AND DEACTIVATING A SPINDLE LOCK IN A MACHINE TOOL
PROCÉDÉ D'ACTIVATION ET DE DÉSACTIVATION D'UN VERROUILLAGE DE BROCHE DANS UNE MACHINE-OUTIL ET MACHINE-OUTIL

(30) Priorität: 26.04.2021 EP 21170463
(43) Veröffentlichungstag der Anmeldung: 06.03.2024
(73) Patentinhaber: Hilti Aktiengesellschaft, 9494 Schaan (LI)
(72) Erfinder: LACHER, Michael, 86830 Schwabmünchen (DE); RINGLER, Stefan, 86853 Schwabmühlhausen (DE); SCHWAB, Roland, 82269 Geltendorf (DE); OUNI, Manel, 86199 Augsburg (DE)
(74) Vertreter: Hilti Aktiengesellschaft Corporate Intellectual Property
(86) Internationale Anmeldenummer: PCT/EP2022/059675
(87) Internationale Veröffentlichungsnummer: WO 2022/228880

(56) Entgegenhaltungen:
- WO-A1-2017/129538
- DE-A1- 102015 222 152

## Beschreibung

Die vorliegende Erfindung betrifft ein Verfahren zur Aktivierung und zur De-Aktivierung einer Spindelarretierung in einer Werkzeugmaschine, wobei die Spindelarretierung beispielsweise durch eine intuitive Bewegung des Nutzers aktiviert werden kann. Insbesondere kann die Aktivierung der Spindelarretierung durch eine Drehbewegung des Nutzers an der Werkzeugaufnahme erreicht werden, die von der Geräte-Elektronik der Werkzeugmaschine erkannt wird. Das Überschreiten eines Grenzwerts für einen Drehwinkel bzw. eine Drehgeschwindigkeit kann von der Geräte-Elektronik als Aktivierungssignal für die Spindelarretierung verwendet werden. Die Spindelarretierung kann deaktiviert werden, wenn die Geräte-Elektronik eine Drehbewegung der Werkzeugaufnahme in die Gegenrichtung feststellt. In weiteren Aspekten betrifft die Erfindung eine Werkzeugmaschine, mit der die Verfahren zur Aktivierung und zur De-Aktivierung einer Spindelarretierung durchgeführt werden können.

### Hintergrund der Erfindung:

Im Stand der Technik sind Werkzeugmaschinen bekannt, mit denen Arbeiten - beispielsweise auf einer Baustelle oder im Heimwerkerbereich - durchgeführt werden können. Werkzeugmaschinen können Schneide- oder Trenngeräte, Winkel- oder Trennschleifer, Kernbohrgeräte, Bohrhämmer oder Bohrmeißel sein, ohne darauf beschränkt zu sein. Die Werkzeugmaschinen umfassen üblicherweise Werkzeuge, bei denen es sich um scheibenförmige, rotierende Werkzeuge handeln kann, wie Trenn- oder Schleifscheiben, oder um schlagende oder meißelnde Werkzeuge.

Die Werkzeuge der Werkzeugmaschinen, die aus dem Stand der Technik bekannt sind, werden zumeist über einen Elektromotor im Inneren der Werkzeugmaschine angetrieben. Der Motor dreht sich, wobei die Drehung des Motors in eine Drehung des Werkzeugs oder eine Schlag- oder Meißelbewegung des Werkzeugs umgesetzt wird. Im Falle eines Kembohrgeräts kommen Bohrkronen als Werkzeug zum Einsatz, um zylinderförmige Bohrkerne aus festen Untergründen, wie Beton, Mauerwerk oder Stein, herauszuschneiden. Bohrkronen sind in ihrem Inneren im Wesentlichen hohl ausgebildet, um den Bohrkern aufzunehmen. Der Nutzer eines Kernbohrgeräts weiß aus Erfahrung, dass es eine Herausforderung darstellen kann, eine im Untergrund blockierte oder verkantete Bohrkrone aus dem Bohrloch herauszubekommen. Werkzeugmaschinen, wie zum Beispiel ein Kernbohrgerät, weisen üblicherweise eine Spindelarretierung auf, die vorzugsweise einen schnellen Wechsel des Werkzeugs der Werkzeugmaschine erlaubt. Dabei kann die Spindel so blockiert werden, dass das Werkzeug der Werkzeugmaschine besonders einfach gelöst werden kann. Im Stand der Technik sind mechanische und elektronische Verfahren zur Spindelarretierung bekannt. Bei den mechanischen Verfahren sind an der Werkzeugmaschine üblicherweise mechanische Schalter oder Schiebeschalter vorgesehen, mit denen die Spindel zum Öffnen des Werkzeugverschlusses verriegelt werden kann. Im Falle einer elektronischen Spindelarretierung wird die Spindel häufig durch Betätigung eines vorzugsweise elektronischen Schaltkontakts arretiert. Dabei kann die Betätigung des Schalters in der Geräte-Elektronik durch einen Mikro-Schalter und/oder einen Mikro-Controller in eine entsprechende Bestromung des Motors der Werkzeugmaschine umgesetzt werden. DE 10 2015 222152 A1 zeigt so eine Spindelarretierung.

Allerdings hat sich gezeigt, dass die Vorsehung eines eigenen Schalters für die Aktivierung und De-Aktivierung der Spindelarretierung in einer Werkzeugmaschine aufwändig zu implementieren ist. Darüber hinaus ist die Vorsehung eines solchen Schalters aus Platzgründen nicht wünschenswert und es kann nicht sichergestellt werden, dass ein solcher Schalter ergonomisch sinnvoll durch einen Nutzer der Werkzeugmaschine zu betätigen wäre. Außerdem sorgen zusätzliche Schalter und Bedienelemente für einen zusätzlichen Platz- und Raumbedarf, was dem Bedürfnis nach kompakten, handlichen Werkzeuggeräten entgegensteht.

Die Aufgabe, die der vorliegenden Erfindung zugrunde liegt, besteht darin, die vorstehend beschriebenen Nachteile des Standes der Technik zu überwinden und Verfahren zur Aktivierung und De-Aktivierung einer Spindelarretierung in einer Werkzeugmaschine anzugeben. Dabei wäre es wünschenswert, wenn die entsprechende Werkzeugmaschine ohne einen zusätzlichen Schalter für die Aktivierung bzw. De-Aktivierung der Spindelarretierung auskommen würde. Darüber hinaus würde es die Fachwelt begrüßen, wenn die Aktivierung der Spindelarretierung möglichst intuitiv gestartet werden könnte, ohne dass der Nutzer aufwändige Tastenkombinationen betätigen oder Handgriffe ausführen muss. Darüber hinaus soll die bereitzustellende Werkzeugmaschine möglichst kompakt und handlich ausgebildet sein. Ein weiteres Anliegen der Erfindung besteht darin, aufzuzeigen, wie eine im Untergrund blockierte oder verkantete Bohrkrone leichter als bisher aus einem Bohrloch befreit werden kann.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

In einem ersten Aspekt ist erfindungsgemäß ein Verfahren zur Aktivierung einer Spindelarretierung in einer Werkzeugmaschine vorgesehen. Die Werkzeugmaschine umfasst eine Werkzeugaufnahme zur Aufnahme eines Werkzeugs, sowie einen Motor und eine Geräte-Elektronik. Das Verfahren zur Aktivierung der Spindelarretierung umfasst die folgenden Schritte:
a) Durchführung einer ersten Drehbewegung mit der Werkzeugaufnahme der Werkzeugmaschine in eine erste Drehrichtung, wobei die erste Drehbewegung durch einen Drehwinkel und/oder eine Drehgeschwindigkeit definierbar ist und wobei in der Werkzeugmaschine Grenzwerte für den Drehwinkel und/oder die Drehgeschwindigkeit hinterlegt sind,
b) Aktivierung der Spindelarretierung durch die Geräte-Elektronik der Werkzeugmaschine, wenn mindestens einer der Grenzwerte für den Drehwinkel und/oder die Drehgeschwindigkeit überschritten wird.

Bei dem vorgeschlagenen Verfahren ist es bevorzugt, dass ein Nutzer der Werkzeugmaschine deren Werkzeugaufnahme berührt und daran dreht. Mit anderen Worten kann der Nutzer eine Drehbewegung mit der Werkzeugaufnahme durchführen, wobei diese Drehbewegung von der Geräte-Elektronik detektiert werden kann. Die Drehung der Werkzeugaufnahme erfolgt vorzugsweise in eine erste Drehrichtung, wobei diese erste Drehrichtung beispielsweise die Raumrichtung «nach rechts» oder «nach links» sein kann. Die entsprechenden Raum- bzw. Drehrichtungen sind in der Figur durch den Rundpfeil angedeutet.

Mit dem vorgeschlagenen Verfahren zur Aktivierung der Spindelarretierung ist es möglich, ein Verfahren bereitzustellen, bei dem die entsprechende Werkzeugmaschine ohne einen zusätzlichen Schalter für die Spindelarretierungs-Aktivierung auskommt. Darüber hinaus ist das Verfahren besonders intuitiv in der Durchführung, da der Nutzer an der Werkzeugmaschine eine intuitive Bewegung ausführt, indem er an der Werkzeugaufnahme dreht. Es ist im Sinne der Erfindung bevorzugt, dass diese intuitive Drehbewegung des Nutzers an der Werkzeugaufnahme der Werkzeugmaschine von der Werkzeugmaschine bzw. ihrer Geräte-Elektronik erkannt werden kann.

Es ist im Sinne der Erfindung bevorzugt, dass die Werkzeugmaschine bzw. ihre Geräte-Elektronik mindestens einen Rotationssensor umfasst, der beispielsweise in räumlicher Nähe zum Motor der Werkzeugmaschine angeordnet sein kann. Der Rotationssensor ist vorzugsweise dazu eingerichtet, eine Drehbewegung zu erkennen. Es ist im Sinne der Erfindung ganz besonders bevorzugt, dass der Rotationssensor dazu in der Lage ist, eine Drehbewegung des Rotors des Motors der Werkzeugmaschine zu erkennen. Der Rotationssensor kann beispielsweise Hall-Sensoren oder AMR-Sensoren (Sensor, dessen Meßprinzip auf dem anisotropen magnetoresistiven Effekt beruht) umfassen, ohne darauf beschränkt zu sein. Es ist im Sinne der Erfindung bevorzugt, dass die zur Erkennung der Drehbewegung verwendeten Sensorsysteme dazu eingerichtet sind, digitale und/oder analoge Signale zu erzeugen, die einen Drehwinkel des Rotors des Motors der Werkzeugmaschine beschreiben.

Die Drehbewegung des Nutzers an der Werkzeugaufnahme der Werkzeugmaschine kann insbesondere durch einen Drehwinkel und/oder eine Drehgeschwindigkeit definiert werden. Der Drehwinkel beschreibt vorzugsweise den Winkelbereich, um den die Werkzeugaufnahme aus einer ursprünglichen Position oder Ruhe-Position ausgelenkt wird. Der Drehwinkel kann vorzugsweise positive oder negative Werte annehmen, wobei positive Drehwinkel beispielsweise für eine Drehbewegung der Werkzeugaufnahme in eine erste Raumrichtung stehen, während negative Drehwinkel beispielsweise für eine Drehbewegung der Werkzeugaufnahme in eine zweite Raumrichtung stehen. Im Kontext der vorliegenden Erfindung sind beispielsweise Drehwinkel bevorzugt, deren Betrag in einem Bereich von 1 bis 60 Grad liegt, wobei vorzugsweise auch alle Zwischenwerte, wie 3,5 Grad, 10 Grad, 17 Grad, 28,3 Grad usw., eingenommen werden können. Es ist im Sinne der Erfindung bevorzugt, dass die Drehwinkel eine positive oder negative Auslenkung des Rotors des Motors der Werkzeugmaschine um eine Ruhe-Position herum angeben.

Die Drehgeschwindigkeit gibt vorzugsweise an, wie schnell sich der Drehwinkel mit der Zeit ändert. Es ist im Sinne der Erfindung bevorzugt, dass die Drehbewegung der Werkzeugaufnahme, die von dem Nutzer der Werkzeugmaschine hervorgerufen bzw. bewirkt wird, als nutzer-initiierte oder erste Drehbewegung der Werkzeugaufnahme der Werkzeugmaschine bezeichnet wird.

Es ist im Sinne der Erfindung bevorzugt, dass für den Drehwinkel und/oder für die Drehgeschwindigkeit Grenzwerte definiert sind, bei deren Überschreiten die Spindelarretierung vorzugsweise automatisch aktiviert wird. Vorzugsweise ist in der vorgeschlagenen Werkzeugmaschine eine bevorzugt elektronisch ausgebildete Spindelarretierungsfunktion implementiert, die bei Überschreiten der Grenzwerte für Drehwinkel und/oder Drehgeschwindigkeit aktiviert werden kann. Diese Aktivierung erfolgt vorzugsweise automatisch, sobald die Geräte-Elektronik der Werkzeugmaschine ein Überschreiten von mindestens einem der Grenzwerte für Drehwinkel und/oder Drehgeschwindigkeit detektiert.

Es ist im Sinne der Erfindung bevorzugt, dass der Betrag des Grenzwerts für den Drehwinkel in einem Bereich von 1 bis 120 Grad liegt, bevorzugt einem Bereich von 1 bis 90 Grad und am meisten bevorzugt in einem Bereich von 1 bis 60 Grad. Das bedeutet mit anderen Worten, dass die Grenzwerte in einem Bereich von -120 Grad bis +120 Grad liegen können, bevorzugt in einem Bereich zwischen -90 Grad bis +90 Grad und am meisten bevorzugt in einem Bereich zwischen -60 Grad und +60 Grad, wobei die Auslenkungen bevorzugt jeweils um eine Ruhe-Position des Rotors des Motors der Werkzeugmaschine herum angegeben werden.

Der Grenzwert für die Drehgeschwindigkeit kann beispielsweise in einem Bereich von 0,05 Grad/Sekunde bis 60 Grad/Sekunde liegen, bevorzugt einem Bereich von 0,2 Grad/Sekunde bis 45 Grad/Sekunde und am meisten bevorzugt in einem Bereich von 0,5 Grad/Sekunde bis 30 Grad/Sekunde.

Es ist im Sinne der Erfindung bevorzugt, dass die Spindelarretierung eine elektronische Funktion darstellt, die beispielsweise bereits in der Werkzeugmaschine implementiert sein kann. Anders als bei konventionellen Werkzeugmaschinen, wie sie aus dem Stand der Technik bekannt sind, ist es im Kontext der vorliegenden Erfindung nicht erforderlich, die Spindelarretierung mit einer eigens dafür vorgesehen Taste oder einem solchen Schalter zu starten. Vielmehr wird im Kontext der vorliegenden Erfindung die Fähigkeit der Werkzeugmaschine bzw. ihrer Geräte-Elektronik ausgenutzt, eine Drehbewegung der Werkzeugaufnahme in Bezug auf Drehwinkel und/oder Drehgeschwindigkeit zu erfassen und so auszuwerten, dass ein Überschreiten von entsprechenden Grenzwerten erkannt und als Auslöser bzw. Start-Signal für die Spindelarretierung verwendet wird.

Es ist im Sinne der Erfindung bevorzugt, dass zur Aktivierung der Spindelarretierung im Kontext der vorliegenden Erfindung lediglich eine Handlung durch den Nutzer der Werkzeugmaschine erforderlich ist, nämlich die Ausführung der Drehbewegung an der Werkzeugaufnahme der Werkzeugmaschine. Damit kann die Aktivierung der Spindelarretierung mit der vorliegenden Erfindung deutlich einfacher und intuitiver gestaltet werden als bei konventionellen Werkzeugmaschinen, wie sie aus dem Stand der Technik bekannt sind. Vorteilhafterweise kann die Handhabung der vorgeschlagenen Werkzeugmaschine auf diese Weise deutlich vereinfacht werden gegenüber konventionellen Werkzeugmaschinen. Außerdem kann bei der Konstruktion der Werkzeugmaschine auf einen zusätzlichen Schalter für Aktivierung der bevorzugt elektronischen Spindelarretierungsfunktion verzichtet werden, da ein solcher Schalter durch das vorteilhafte Zusammenwirken der Geräte-Elektronik und der Werkzeugmaschine, wie es Gegenstand der vorliegenden Erfindung ist, nicht mehr erforderlich ist. Durch das Einsparen eines zusätzlichen Schalters kann durch die Erfindung eine besonders kompakte, handliche und intuitiv besser zu handhabende Werkzeugmaschine bereitgestellt werden.

Es ist im Sinne der Erfindung bevorzugt, dass die Drehbewegung von der Geräte-Elektronik als Drehung des Motors ohne aktive Bestromung detektiert wird. Vorzugsweise ist die Geräte-Elektronik der Werkzeugmaschine dazu eingerichtet, eine Drehbewegung der Werkzeugaufnahme als Drehung des Motors ohne aktive Bestromung zu erkennen und das Überschreiten von Grenzwerten in Bezug auf eine Drehwinkel und/oder eine Drehgeschwindigkeit der Drehbewegung als Start-Signal für die Aktivierung der Spindelarretierung aufzufassen.

In einem zweiten Aspekt betrifft die Erfindung ein Verfahren zur De-Aktivierung einer Spindelarretierung in einer Werkzeugmaschine, wobei die Werkzeugmaschine eine Werkzeugaufnahme zur Aufnahme eines Werkzeugs umfasst, sowie einen Motor und eine Geräte-Elektronik. Das Verfahren zur De-Aktivierung der Spindelarretierung umfasst die folgenden Schritte:
a) Beaufschlagung des Motors der Werkzeugmaschine mit einem Drehmoment in einer zweiten Drehrichtung, während die Spindelarretierung aktiv ist,
b) Drehbewegung der Werkzeugaufnahme in die zweite Raumrichtung aufgrund der Beaufschlagung des Motors mit dem Drehmoment in der zweiten Raumrichtung,
c) Detektierung der Drehbewegung in die zweite Raumrichtung durch die Geräte-Elektronik,
d) De-Aktivierung der Spindelarretierung durch die Geräte-Elektronik der Werkzeugmaschine, wenn eine Drehbewegung der Werkzeugaufnahme in der zweiten Raumrichtung detektiert wird.

Die für das Verfahren zur Aktivierung der Spindelarretierung eingeführten Begriffe, Definitionen und technischen Vorteile gelten vorzugsweise für das Verfahren zur De-Aktivierung der Spindelarretierung analog.

Es ist im Sinne der Erfindung bevorzugt, dass im Rahmen der Spindelarretierung der Motor der Werkzeugmaschine mit einem Drehmoment beaufschlagt wird, wobei eine Dreh- bzw. Wirkrichtung dieses Drehmoments vorzugsweise der ersten Drehrichtung der Drehbewegung der Werkzeugaufnahme, die von dem Nutzer der Werkzeugmaschine durchgeführt wird, entgegengerichtet ist. Es ist im Sinne der Erfindung bevorzugt, dass die Spindelarretierung eine elektronische Funktion der Werkzeugmaschine ist, bei der der Motor der Werkzeugmaschine von der Leistungs- oder Geräte-Elektronik bestromt wird. Es stellt einen Vorteil der Erfindung dar, dass keine zusätzliche Vorrichtung an der Werkzeugmaschine erforderlich ist, um das vorgeschlagene Verfahren durchzuführen. Es ist im Sinne der Erfindung bevorzugt, dass eine Drehzahl des Motors der Werkzeugmaschine auf einen Wert im Bereich von 0 Umdrehungen pro Zeiteinheit (beispielsweise rounds per minute, RPM) geregelt wird, so dass auf diese Weise eine Drehung des Motors der Werkzeugmaschine verhindert wird.

Die Dreh- bzw. Wirkrichtung des Drehmoments wird im Sinne der Erfindung als zweite Drehrichtung bezeichnet. Sie ist der Drehrichtung der ersten Drehbewegung der Werkzeugaufnahme vorzugsweise entgegengerichtet. Wenn die Werkzeugaufnahme von dem Nutzer der Werkzeugmaschine beispielsweise in eine Raumrichtung «nach rechts» gedreht wird, um die Spindelarretierung zu aktivieren, wirkt das Drehmoment, mit dem der Motor der Werkzeugmaschine beaufschlagt wird, vorzugsweise in eine Raumrichtung «nach links».

Durch die Beaufschlagung des Motors mit dem Drehmoment wird vorzugsweise eine Drehbewegung der Werkzeugaufnahme hervorgerufen. Diese vom Motor bewirkte Drehbewegung der Werkzeugaufnahme wird im Sinne der Erfindung bevorzugt als zweite Drehbewegung der Werkzeugaufnahme bezeichnet. Es ist im Sinne der Erfindung bevorzugt, dass ein Loslassen der Werkzeugaufnahme durch den Nutzer dazu führt, dass die Drehmoment-Beaufschlagung zu einer Drehbewegung der Werkzeugaufnahme in die zweite Raumrichtung führt. Mit anderen Worten kann die Werkzeugaufnahme insbesondere dann eine Drehbewegung entgegen einer Drehrichtung der ursprünglichen Drehbewegung ausführen, wenn der Nutzer der Werkzeugmaschine die Werkzeugaufnahme loslässt, d.h. die Werkzeugaufnahme nicht mehr festhält. Es ist im Sinne der Erfindung ganz besonders bevorzugt, dass die Beaufschlagung des Motors mit dem Drehmoment zu einer Drehbewegung der Werkzeugaufnahme führt, wobei diese bevorzugt motor-initiierte Drehbewegung der ursprünglichen, vom Nutzer initiierten Drehbewegung entgegengerichtet ist. Mit anderen Worten führt die Beaufschlagung des Motors mit dem Drehmoment zu einer Drehbewegung der Werkzeugaufnahme, wobei diese zweite Drehbewegung der Werkzeugaufnahme der ersten Drehbewegung der Werkzeugaufnahme entgegengerichtet ist. Die zweite Drehbewegung der Werkzeugaufnahme kann im Sinne der Erfindung bevorzugt auch als Gegen-Drehbewegung zu der ursprünglichen ersten Drehbewegung der Werkzeugaufnahme bezeichnet werden. Vorzugsweise erfolgt die Beaufschlagung des Motors mit dem Drehmoment in der zweiten Drehrichtung insbesondere dann, wenn die Spindelarretierung aktiv ist.

Die Drehbewegung der Werkzeugaufnahme in die zweite Raumrichtung kann von der Geräte-Elektronik der Werkzeugmaschine detektiert werden. Die Erkennung dieser zweiten Drehbewegung der Werkzeugaufnahme erfolgt vorzugsweise mit demselben Sensor, der auch für die Erkennung der ersten Drehbewegung verwendet wird. Es kann alternativ auch bevorzugt sein, dass zwei unterschiedliche Sensoren oder Sensorsysteme verwendet werden. Vorzugsweise unterscheiden sich die erste Drehbewegung und die zweite Drehbewegung in ihrer Drehrichtung und durch die Richtung des elektrischen Stroms, mit dem der Motor der Werkzeugmaschine bestromt wird.

Vorzugsweise wird die Spindelarretierung der Werkzeugmaschine deaktiviert, sobald die Geräte-Elektronik die Drehbewegung der Werkzeugaufnahme in die zweite Raumrichtung feststellt oder wenn die Werkzeugaufnahme wieder im Bereich der Ruhe-Position vorliegt. Die Werkzeugmaschine kann zur Detektierung der Drehbewegungen bzw. zu deren Auswertung und Umsetzung in eine (De-)Aktivierungssignal für die Spindelarretierung eine Steuereinrichtung umfassen, die ihrerseits bevorzugt einen Prozessor und/oder einen Speicher umfassen kann. Es ist im Sinne der Erfindung bevorzugt, dass die Werkzeugmaschine eine Steuervorrichtung umfasst, die dazu eingerichtet ist, Drehbewegungen der Werkzeugaufnahme in die unterschiedlichen Raumrichtungen zu erkennen und die Spindelarretierung je nach Raumrichtung zu aktivieren oder zu deaktivieren.

Es ist im Sinne der Erfindung ganz besonders bevorzugt, dass die Werkzeugmaschine ohne einen zusätzlichen Schalter für die (De-)Aktivierung der Spindelarretierung auskommt. Wie beschrieben, kann auf einen eigens für die (De-)Aktivierung der Spindelarretierung bestimmten Schalter an der Werkzeugmaschine verzichtet werden, da die (De-)Aktivierung der Spindelarretierung erfindungsgemäß durch eine Erkennung einer Drehbewegung der Werkzeugaufnahme bewirkt wird.

Vorteile der Erfindung bestehen insbesondere darin, dass eine besonders intuitive Aktivierung bzw. De-Aktivierung der Spindelarretierung bereitgestellt werden kann. Darüber hinaus wird eine einfache, intuitive und übersichtliche Bedienung der Werkzeugmaschine ermöglicht, die insbesondere mit einer vergleichsweise geringen Anzahl von Schaltern auskommt. Dadurch können insbesondere auch die Herstellungskosten für die Werkzeugmaschine gering gehalten werden und eine platzsparende, kompakte Werkzeugmaschine bereitgestellt werden. Dies kann insbesondere dann von besonderem Vorteil sein, wenn keine ständer- sondern eine handgeführte Werkzeugmaschine bereitgestellt werden soll. Es ist im Sinne der Erfindung ganz besonders bevorzugt, dass die Werkzeugmaschine ein Kernbohrgerät ist. Eine Verwendung der vorgeschlagenen Verfahren für andere Werkzeugmaschinentypen, wie Trenn- oder Winkelschleifer, Bohrmaschinen oder -hämmer, Meißel- oder andere Geräte, ist selbstverständlich auch möglich.

In einem weiteren Aspekt betrifft die Erfindung eine Werkzeugmaschine zur Durchführung des Verfahrens zur Aktivierung einer Spindelarretierung, wobei die Werkzeugmaschine eine Werkzeugaufnahme zur Aufnahme eines Werkzeugs, sowie einen Motor und eine Geräte-Elektronik aufweist. Die Werkzeugmaschine gemäß diesem Aspekt der Erfindung ist dadurch gekennzeichnet, dass die Werkzeugaufnahme drehbar ausgebildet ist und die Geräte-Elektronik dazu eingerichtet ist, einen Drehwinkel und/oder eine Drehgeschwindigkeit einer Drehbewegung der Werkzeugaufnahme zu detektieren. Dabei ist mit der Geräte-Elektronik eine Spindelarretierung aktivierbar, wenn mindestens ein Grenzwert für den Drehwinkel und/oder die Drehgeschwindigkeit überschritten wird. Die Geräte-Elektronik kann die vorzugsweise elektronische Spindelarretierungsfunktion der Werkzeugmaschine aktivieren, wenn sie eine Drehbewegung der Werkzeugaufnahme feststellt, die einen Grenz-Drehwinkel überschreitet. Alternativ oder ergänzend kann die Geräte-Elektronik die Spindelarretierung aktivieren, wenn eine besonders schnelle Drehbewegung erkannt wird. Eine besonders schnelle Drehbewegung kann insbesondere dadurch erkannt werden, dass die Drehgeschwindigkeit der Drehbewegung eine Grenz-Drehgeschwindigkeit überschreitet. Die Grenzwerte für Drehwinkel und/oder Drehgeschwindigkeit können in der Werkzeugmaschine hinterlegt sein. Dazu kann die Werkzeugmaschine vorzugsweise eine Steuervorrichtung umfassen, die beispielsweise einen Prozessor und/oder einen Speicher umfasst. Die Steuervorrichtung der Werkzeugmaschine kann insbesondere dazu eingerichtet sein, einen Vergleich zwischen aktuellem Drehwinkel und Grenz-Drehwinkel anzustellen. Die Steuervorrichtung kann insbesondere dazu eingerichtet sein, einen Vergleich zwischen einer aktuellen Drehgeschwindigkeit und einer Grenz-Drehgeschwindigkeit durchzuführen. Wird bei diesem Vergleich festgestellt, dass die aktuellen Werte für Drehwinkel und/oder Drehgeschwindigkeit die entsprechenden Grenzwerte überschreiten, so wird die Spindelarretierung aktiviert. Diese Aktivierung erfolgt vorzugsweise durch die Geräte-Elektronik bzw. die Steuervorrichtung. Die Steuervorrichtung kann insbesondere eine Komponente der Geräte-Elektronik darstellen.

In noch einem weiteren Aspekt betrifft die Erfindung eine Werkzeugmaschine zur Durchführung des Verfahrens zur De-Aktivierung einer Spindelarretierung, wobei die Werkzeugmaschine eine Werkzeugaufnahme zur Aufnahme eines Werkzeugs, sowie einen Motor und eine Geräte-Elektronik aufweist. Die Werkzeugmaschine gemäß diesem Aspekt der Erfindung ist dadurch gekennzeichnet, dass der Motor der Werkzeugmaschine mit einem Drehmoment beaufschlagbar ist, wobei die Geräte-Elektronik dazu eingerichtet ist, eine Drehbewegung der Werkzeugaufnahme zu detektieren und die Spindelarretierung zu deaktivieren, wenn eine Drehbewegung in einer zweite Raumrichtung detektiert wird. Die Werkzeugaufnahme ist vorzugsweise auch in dieser bevorzugten Ausgestaltung der Erfindung drehbar ausgebildet. Es ist im Sinne der Erfindung bevorzugt, dass die Beaufschlagung des Motors mit dem Drehmoment durch die Werkzeugmaschine bzw. ihre Spindelarretierungsfunktion erfolgt. Die Dreh- bzw. Wirkrichtung ist vorzugsweise der Richtung der ursprünglichen Drehbewegung der Werkzeugaufnahme, die vom Nutzer der Werkzeugmaschine bewirkt wird, entgegengerichtet. Die Drehmoment-Beaufschlagung des Motors führt insbesondere zu einer Drehbewegung der Werkzeugaufnahme in die Dreh- bzw. Wirkrichtung des Drehmoments. Das bedeutet im Sinne der Erfindung bevorzugt, dass die Werkzeugaufnahme vom Motor der Werkzeugmaschine zu einer Drehbewegung veranlasst wird, die der vom Nutzer hervorgerufenen, anfänglichen oder ersten Drehbewegung der Werkzeugaufnahme entgegengerichtet ist. Diese Drehbewegung kann ebenfalls von der Geräte-Elektronik der Werkzeugmaschine detektiert werden und als Deaktivierungssignal für die Spindelarretierung verwendet werden. Mit anderen Worten wird die Spindelarretierung deaktiviert, wenn die Werkzeugmaschine eine zweite Drehbewegung der Werkzeugaufnahme feststellt, die einer ersten Drehbewegung der Werkzeugaufnahme entgegengerichtet ist.

Es ist im Sinne der Erfindung bevorzugt, dass die Beaufschlagung des Motors mit dem Drehmoment erfolgt, während die Spindelarretierung aktiv ist. Es ist vorzugsweise die Beaufschlagung des Motors mit dem Drehmoment, die zu der zweiten Drehbewegung der Werkzeugaufnahme führt. Mit anderen Worten bewirkt die Beaufschlagung des Motors mit dem Drehmoment eine Drehbewegung der Werkzeugaufnahme, wobei das Drehmoment der ersten Drehbewegung der Werkzeugaufnahme entgegengerichtet ist.

Es ist im Sinne der Erfindung ganz besonders bevorzugt, dass die Werkzeugmaschine ohne einen zusätzlichen Schalter für eine Aktivierung und/oder De-Aktivierung der Spindelarretierung auskommt.

Vorzugsweise kann die Erfindung auch das Lockern einer in einem Bohrloch verklemmten Bohrkrone erleichtern, wenn die Werkzeugmaschine ein Kernbohrgerät ist. Um eine verklemmte Bohrkrone aus dem Bohrgrund zu entfernen, sind in der Regel Drehbewegungen an der Werkzeugmaschine erforderlich. Bei einem nicht-arretiertem Gerät besteht allerdings keine starre Verbindung zwischen Werkzeug und den Griffen der Werkzeugmaschine. Deshalb können die Gerätegriffe auch nicht zum Lösen der Bohrkrone verwendet werden. Mit der vorgeschlagenen intuitiven Aktivierung der Spindelarretierung wird das Drehen des Anwenders an der Werkzeugmaschine von der Werkzeugmaschine erkannt und es kann durch das Gegenmoment der Spindelarretierungsfunktion ein Drehmoment auf die Bohrkrone übertragen werden.

Es hat sich gezeigt, dass mit der Erfindung der Geräteeinsatz erheblich erweitert bzw. verbessert werden kann. Wenn die Erfindung beispielsweise in einem Winkelschleifer eingesetzt wird, kann es in manchen Geräten erforderlich sein, zum Öffnen und/oder Schließen der Schleifscheibenbefestigung ein zweites Werkzeug oder eine mechanische Arretierung zu betätigen, d.h. in der Regel zu drücken. Diese Betätigung von zusätzlichen Komponenten der Werkzeugmaschine kann bei der erfindungsgemäß vorgeschlagenen Werkzeugmaschine vorteilhafterweise entfallen. Ein ähnlicher Vorteil kann beispielsweise erreicht werden, wenn die Erfindung an einer Handkreissäge eingesetzt wird.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:

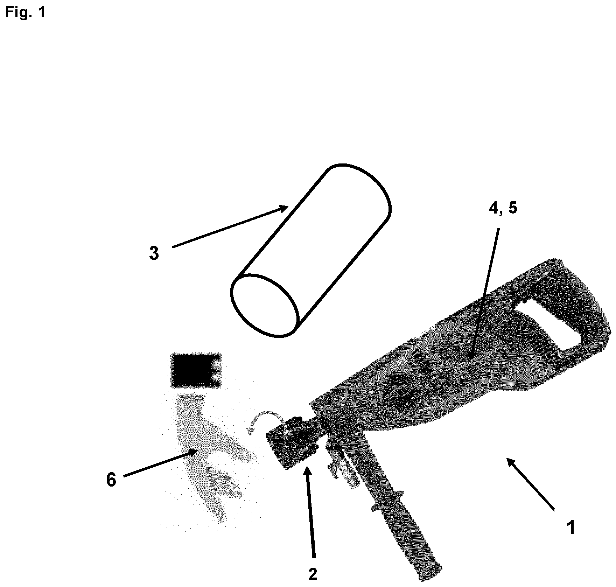

- Fig. 1: Ansicht einer beispielhaften bevorzugten Ausführungsform der Erfindung

### Ausführungsbeispiele und Figurenbeschreibung:

Figur 1 zeigt eine bevorzugte Ausgestaltung einer vorgeschlagenen Werkzeugmaschine 1. Die Werkzeugmaschine 1 umfasst einen Motor 4 und eine Geräte-Elektronik 5, die in einem Gehäuse der Werkzeugmaschine 1 untergebracht sein können. Die in Fig. 1 angegebenen Orte für den Motor 4 und die Geräte-Elektronik 5 der Werkzeugmaschine 1 sind beispielhaft zu verstehen; denkbar sind selbstverständlich auch andere Positionen innerhalb der vorgeschlagenen Werkzeugmaschine 1. Die Werkzeugmaschine 1 weist darüber hinaus eine Werkzeugaufnahme 2 zur Befestigung eines Werkzeugs 3 auf. Bei der in Fig. 1 dargestellten Werkzeugmaschine 1 handelt es sich um ein Kernbohrgerät, dessen Werkzeug von einer Bohrkrone 3 gebildet ist. Eine Bohrkrone 3 ist schematisch oben links im oberen Bereich von Fig. 1 angedeutet.

Darüber hinaus ist in Fig. 1 eine Hand eines Nutzers 6 der Werkzeugmaschine 1 angedeutet. Der Nutzer 6 kann die Werkzeugaufnahme 2 der Werkzeugmaschine 1 ergreifen und sie drehen. Er bewirkt damit im Sinne der Erfindung bevorzugt die erste Drehbewegung der Werkzeugaufnahme 2 der Werkzeugmaschine 1. Diese erste Drehbewegung der Werkzeugaufnahme 2 kann in eine Raumrichtung «nach rechts» oder «nach links» erfolgen, was in Fig. 1 durch den gebogenen Doppelpfeil angedeutet wird. In farbiger Darstellung ist dieser gebogene Doppelpfeil orange. Die Drehrichtung der ersten Drehbewegung der Werkzeugaufnahme 2 wird im Sinne der Erfindung bevorzugt auch als erste Drehrichtung bezeichnet. Die Werkzeugmaschine 1 ist vorzugsweise dazu eingerichtet, die erste Drehbewegung der Werkzeugaufnahme 2 zu erkennen. Die Drehbewegung der Werkzeugaufnahme 2 kann vorzugweise durch einen Drehwinkel und/oder eine Drehgeschwindigkeit beschrieben werden. In der Werkzeugmaschine 1 sind Grenzwerte für den Drehwinkel und/oder die Drehgeschwindigkeit hinterlegt, wobei die Werkzeugmaschine 1 vorzugsweise dazu eingerichtet ist, aktuelle Drehwinkel und Drehgeschwindigkeiten zu erfassen und mit den hinterlegten Grenzwerten zu vergleichen. Ist das Ergebnis eines solchen Vergleichs, dass einer der hinterlegten Grenzwerte überschritten wird, wird vorzugsweise automatisch die Spindelarretierung aktiviert.

Wenn die Spindelarretierung aktiv ist, kann der Motor 4 der Werkzeugmaschine 1 mit einem Drehmoment beaufschlagt werden. Diese Drehmoment-Beaufschlagung kann von der Geräte-Elektronik 5 der Werkzeugmaschine 1 veranlasst werden. Das Drehmoment ist vorzugsweise der Drehrichtung der ersten Drehbewegung der Werkzeugaufnahme 2 entgegengerichtet. Das Drehmoment bewirkt eine zweite Drehbewegung der Werkzeugaufnahme 2, wobei die zweite Drehbewegung der Werkzeugaufnahme 2 der ersten Drehbewegung der Werkzeugaufnahme 2 entgegengerichtet ist. Diese zweite Drehbewegung der Werkzeugaufnahme 2 kann von der Werkzeugmaschine 1 erkannt werden und in eine De-Aktivierung der Spindelarretierung umgesetzt werden. Mit anderen Worten kann die Erkennung der zweiten Drehbewegung der Werkzeugaufnahme 2 als Signal zur De-Aktivierung der Spindelarretierung der Werkzeugmaschine 1 verwendet werden. Die entsprechenden Erfassungs- und Steuerungsvorgänge finden vorzugsweise in der Geräte-Elektronik 5 der Werkzeugmaschine 1 statt. Die Werkzeugmaschine 1 kann aber auch eine Steuervorrichtung (nicht dargestellt) umfassen, die Bestandteil der Geräte-Elektronik 5 sein kann. In dieser Ausgestaltung der Erfindung können Erfassungs- und Steuerungsvorgänge vorzugsweise auch in der Steuervorrichtung stattfinden. Die Steuervorrichtung kann einen Prozessor und/oder einen Speicher umfassen, wobei beispielsweise in dem Speicher der Steuervorrichtung die Grenzwerte für den Drehwinkel und die Drehgeschwindigkeit hinterlegt sein können. Die Position des Motors 4 und der Geräte-Elektronik 5 ist in Fig. 1 nur beispielhaft angedeutet. Die genannten Komponenten der Werkzeugmaschine 1 können selbstverständlich an verschiedenen anderen Orten innerhalb der Werkzeugmaschine 1 angeordnet sein.

### Bezugszeichenliste

- 1: Werkzeugmaschine
- 2: Werkzeugaufnahme der Werkzeugmaschine
- 3: Werkzeug der Werkzeugmaschine
- 4: Motor der Werkzeugmaschine
- 5: Geräte-Elektronik der Werkzeugmaschine
- 6: Nutzer

## Patentansprüche

1. Verfahren zur Aktivierung einer Spindelarretierung in einer Werkzeugmaschine (1), wobei die Werkzeugmaschine (1) eine Werkzeugaufnahme (2) zur Aufnahme eines Werkzeugs (3) umfasst, sowie einen Motor (4) und eine Geräte-Elektronik (5) **gekennzeichnet durch die folgenden Verfahrensschritte:**
a) Durchführung einer ersten Drehbewegung mit der Werkzeugaufnahme (2) der Werkzeugmaschine (1) in eine erste Drehrichtung, wobei die erste Drehbewegung durch einen Drehwinkel und/oder eine Drehgeschwindigkeit definierbar ist und wobei in der Werkzeugmaschine (1) Grenzwerte für den Drehwinkel und/oder die Drehgeschwindigkeit hinterlegt sind,
b) Aktivierung der Spindelarretierung durch die Geräte-Elektronik (5) der Werkzeugmaschine (1), wenn mindestens einer der Grenzwerte für den Drehwinkel und/oder die Drehgeschwindigkeit überschritten wird.

2. Verfahren zur De-Aktivierung einer Spindelarretierung in einer Werkzeugmaschine (1), wobei die Werkzeugmaschine (1) eine Werkzeugaufnahme (2) zur Aufnahmen eines Werkzeugs (3) umfasst, sowie einen Motor (4) und eine Geräte-Elektronik (5) **gekennzeichnet durch die folgenden Verfahrensschritte:**
a) Beaufschlagung des Motors (4) der Werkzeugmaschine (1) mit einem Drehmoment in einer zweiten Drehrichtung, während die Spindelarretierung aktiv ist,
b) Drehbewegung der Werkzeugaufnahme (2) in die zweite Raumrichtung aufgrund der Beaufschlagung des Motors (4) mit dem Drehmoment in der zweiten Raumrichtung,
c) Detektierung der Drehbewegung in die zweite Raumrichtung durch die Geräte-Elektronik (5),
d) De-Aktivierung der Spindelarretierung durch die Geräte-Elektronik (5) der Werkzeugmaschine (1), wenn eine Drehbewegung der Werkzeugaufnahme (2) in der zweiten Raumrichtung detektiert wird.

3. Verfahren nach Anspruch 1 und 2
**dadurch gekennzeichnet, dass**
die erste und die zweite Raumrichtung einander entgegengerichtet sind.

4. Verfahren nach Anspruch 1
**dadurch gekennzeichnet, dass**
die Drehbewegung der Werkzeugaufnahme (2) in die erste Raumrichtung von der Geräte-Elektronik (5) als Drehung des Motors (4) der Werkzeugmaschine (1) ohne aktive Bestromung detektiert wird.

5. Verfahren nach Anspruch 1 oder 4
**dadurch gekennzeichnet, dass**
ein Betrag des Grenzwerts für den Drehwinkel in einem Bereich von 1 bis 120 Grad liegt, bevorzugt einem Bereich von 1 bis 90 Grad und am meisten bevorzugt in einem Bereich von 1 bis 60 Grad.

6. Verfahren nach einem der Ansprüche 1, 4 oder 5
**dadurch gekennzeichnet, dass**
ein Grenzwert für die Drehgeschwindigkeit in einem Bereich von 0,05 Grad/Sekunde bis 60 Grad/Sekunde liegt, bevorzugt einem Bereich von 0,2 Grad/Sekunde bis 45 Grad/Sekunde und am meisten bevorzugt in einem Bereich von 0,5 Grad/Sekunde bis 30 Grad/Sekunde.

7. Verfahren nach Anspruch 2 oder 3
**dadurch gekennzeichnet, dass**
ein Loslassen der Werkzeugaufnahme (2) durch einen Nutzer (6) der Werkzeugmaschine (1) zu einer Drehmoment-Beaufschlagung des Motors (4) und zu einer Drehbewegung der Werkzeugaufnahme (2) in die zweite Raumrichtung führt.

8. Werkzeugmaschine zur Durchführung des Verfahrens nach einem der Ansprüche 1 oder 4 bis 6, wobei die Werkzeugmaschine (1) eine Werkzeugaufnahme (2) zur Aufnahme eines Werkzeugs (3), sowie einen Motor (4) und eine Geräte-Elektronik (5) aufweist,
**dadurch gekennzeichnet, dass**
die Werkzeugaufnahme (2) drehbar ausgebildet ist und die Geräte-Elektronik (5) dazu eingerichtet ist, einen Drehwinkel und/oder eine Drehgeschwindigkeit einer Drehbewegung der Werkzeugaufnahme (2) zu detektieren, wobei mit der Geräte-Elektronik (5) eine Spindelarretierung aktivierbar ist, wenn mindestens ein Grenzwerte für den Drehwinkel und/oder die Drehgeschwindigkeit überschritten wird.

9. Werkzeugmaschine (1) zur Durchführung des Verfahrens nach einem der Ansprüche 2, 3 oder 7, wobei die Werkzeugmaschine (1) eine Werkzeugaufnahme (2) zur Aufnahme eines Werkzeugs (3), sowie einen Motor (4) und eine Geräte-Elektronik (5) aufweist,
**dadurch gekennzeichnet, dass**
der Motor (4) der Werkzeugmaschine (1) mit einem Drehmoment beaufschlagbar ist, wobei die Geräte-Elektronik (5) dazu eingerichtet ist, eine Drehbewegung der Werkzeugaufnahme (2) zu detektieren und die Spindelarretierung zu deaktivieren, wenn eine Drehbewegung in einer zweite Raumrichtung detektiert wird.

10. Werkzeugmaschine (1) nach Anspruch 9
**dadurch gekennzeichnet, dass**
die Beaufschlagung des Motors (4) mit dem Drehmoment erfolgt, während eine Spindelarretierung aktiv ist.

11. Werkzeugmaschine (1) nach Anspruch 9 oder 10
**dadurch gekennzeichnet, dass**
die Beaufschlagung des Motors (4) mit dem Drehmoment zu der Drehbewegung der Werkzeugaufnahme (2) führt.

12. Werkzeugmaschine (1) nach einem der Ansprüche 8 bis 11
**dadurch gekennzeichnet, dass**
die Werkzeugmaschine (1) ein Kembohrgerät ist.

13. Werkzeugmaschine (1) nach einem der Ansprüche 8 bis 12
**dadurch gekennzeichnet, dass**
die Werkzeugmaschine (1) ohne einen zusätzlichen Schalter für eine Aktivierung und/oder De-Aktivierung der Spindelarretierung auskommt.

## Claims

1. Method for activating a spindle lock in a power tool (1), wherein the power tool (1) comprises a tool fitting (2) for receiving a tool (3), as well as a motor (4) and device electronics (5)
**characterized by the following method steps:**
a) carrying out a first rotary movement with the tool fitting (2) of the power tool (1) in a first direction of rotation, wherein the first rotary movement can be defined by an angle of rotation and/or a rotational speed and wherein limit values for the angle of rotation and/or the rotational speed are stored in the power tool (1),
b) activation of the spindle lock by the device electronics (5) of the power tool (1) if at least one of the limit values for the angle of rotation and/or the rotational speed is exceeded.

2. Method for deactivating a spindle lock in a power tool (1), wherein the power tool (1) comprises a tool fitting (2) for receiving a tool (3), as well as a motor (4) and device electronics (5)
**characterized by the following method steps:**
a) applying a torque to the motor (4) of the power tool (1) in a second direction of rotation while the spindle lock is active,
b) rotary movement of the tool fitting (2) in the second spatial direction due to the torque being applied to the motor (4) in the second spatial direction,
c) detection of the rotary movement in the second spatial direction by the device electronics (5),
d) deactivation of the spindle lock by the device electronics (5) of the power tool (1) when a rotary movement of the tool fitting (2) in the second spatial direction is detected.

3. Method according to Claims 1 and 2,
**characterized in that**
the first and the second spatial direction are opposite to each other.

4. Method according to Claim 1,
**characterized in that**
the rotary movement of the tool fitting (2) in the first spatial direction is detected by the device electronics (5) as a rotation of the motor (4) of the power tool (1) without active current supply.

5. Method according to Claim 1 or 4,
**characterized in that**
a magnitude of the limit value for the angle of rotation is in a range from 1 to 120 degrees, preferably in a range from 1 to 90 degrees, and most preferably in a range from 1 to 60 degrees.

6. Method according to one of Claims 1, 4 or 5,
**characterized in that**
a limit value for the rotational speed is in a range from 0.05 degree/second to 60 degrees/second, preferably in a range from 0.2 degree/second to 45 degrees/second, and most preferably in a range from 0.5 degree/second to 30 degrees/second.

7. Method according to Claim 2 or 3,
**characterized in that**
releasing the tool fitting (2) by a user (6) of the power tool (1) leads to a torque being applied to the motor (4) and to a rotary movement of the tool fitting (2) in the second spatial direction.

8. Power tool for carrying out the method according to one of Claims 1 or 4 to 6, wherein the power tool (1) has a tool fitting (2) for receiving a tool (3), as well as a motor (4) and device electronics (5),
**characterized in that**
the tool fitting (2) is designed to be rotatable and the device electronics (5) are set up to detect an angle of rotation and/or a rotational speed of a rotary movement of the tool fitting (2), wherein a spindle lock is able to be activated with the device electronics (5) if at least one limit value for the angle of rotation and/or the rotational speed is exceeded.

9. Power tool (1) for carrying out the method according to one of Claims 2, 3 or 7, wherein the power tool (1) has a tool fitting (2) for receiving a tool (3), as well as a motor (4) and device electronics (5),
**characterized in that**
a torque can be applied to the motor (4) of the power tool (1), wherein the device electronics (5) are set up to detect a rotary movement of the tool fitting (2) and to deactivate the spindle lock when a rotary movement in a second spatial direction is detected.

10. Power tool (1) according to Claim 9,
**characterized in that**
the torque is applied to the motor (4) while a spindle lock is active.

11. Power tool (1) according to Claim 9 or 10,
**characterized in that**
the application of the torque to the motor (4) leads to the rotary movement of the tool fitting (2).

12. Power tool (1) according to one of Claims 8 to 11,
**characterized in that**
the power tool (1) is a core drilling device.

13. Power tool (1) according to one of Claims 8 to 12,
**characterized in that**
the power tool (1) does not require an additional switch for activating and/or deactivating the spindle lock.

## Revendications

1. Procédé permettant d'activer un dispositif de blocage de broche dans une machine-outil (1), la machine-outil (1) comprenant un logement d'outil (2) pour recevoir un outil (3), ainsi qu'un moteur (4) et une électronique d'appareil (5), **caractérisé par** les étapes de procédé suivantes consistant à :
a) effectuer un premier mouvement de rotation avec le logement d'outil (2) de la machine-outil (1) dans un premier sens de rotation, le premier mouvement de rotation pouvant être défini par un angle de rotation et/ou une vitesse de rotation, et dans lequel des valeurs limites pour l'angle de rotation et/ou la vitesse de rotation sont enregistrées dans la machine-outil (1),
b) activer le dispositif de blocage de broche par l'électronique d'appareil (5) de la machine-outil (1) lorsqu'au moins l'une des valeurs limites pour l'angle de rotation et/ou la vitesse de rotation est dépassée.

2. Procédé permettant de désactiver un dispositif de blocage de broche dans une machine-outil (1), la machine-outil (1) comprenant un logement d'outil (2) pour recevoir un outil (3), ainsi qu'un moteur (4) et une électronique d'appareil (5), **caractérisé par** les étapes de procédé suivantes consistant à :
a) solliciter le moteur (4) de la machine-outil (1) par un couple de rotation dans un deuxième sens de rotation, pendant que le dispositif de blocage de broche est actif,
b) effectuer un mouvement de rotation du logement d'outil (2) dans la deuxième direction spatiale en raison de la sollicitation du moteur (4) par le couple de rotation dans la deuxième direction spatiale,
c) détecter le mouvement de rotation dans la deuxième direction spatiale par l'électronique d'appareil (5),
d) désactiver le dispositif de blocage de broche par l'électronique d'appareil (5) de la machine-outil (1) lorsqu'un mouvement de rotation du logement d'outil (2) dans la deuxième direction spatiale est détecté.

3. Procédé selon les revendications 1 et 2,
**caractérisé en ce que**
la première et la deuxième direction spatiale sont opposées l'une à l'autre.

4. Procédé selon la revendication 1,
**caractérisé en ce que**
le mouvement de rotation du logement d'outil (2) dans la première direction spatiale est détecté par l'électronique d'appareil (5) comme une rotation du moteur (4) de la machine-outil (1) sans mise sous tension active.

5. Procédé selon la revendication 1 ou 4,
**caractérisé en ce que**
un montant de la valeur limite pour l'angle de rotation est compris dans une plage de 1 à 120 degrés, de préférence dans une plage de 1 à 90 degrés, et de la plus grande préférence dans une plage de 1 à 60 degrés.

6. Procédé selon l'une quelconque des revendications 1, 4 ou 5,
**caractérisé en ce que**
une valeur limite pour la vitesse de rotation est comprise dans une plage de 0,05 degré/seconde à 60 degrés/seconde, de préférence dans une plage de 0,2 degré/seconde à 45 degrés/seconde, et de la plus grande préférence dans une plage de 0,5 degré/seconde à 30 degrés/seconde.

7. Procédé selon la revendication 2 ou 3,
**caractérisé en ce que**
le fait qu'un utilisateur (6) de la machine-outil (1) lâche le logement d'outil (2) conduit à une sollicitation du moteur (4) par un couple de rotation et à un mouvement de rotation du logement d'outil (2) dans la deuxième direction spatiale.

8. Machine-outil permettant d'exécuter le procédé selon l'une quelconque des revendications 1 ou 4 à 6, dans laquelle la machine-outil (1) présente un logement d'outil (2) pour recevoir un outil (3), ainsi qu'un moteur (4) et une électronique d'appareil (5), **caractérisé en ce que**
le logement d'outil (2) est réalisé de manière rotative, et l'électronique d'appareil (5) est conçue pour détecter un angle de rotation et/ou une vitesse de rotation d'un mouvement de rotation du logement d'outil (2), dans laquelle l'électronique d'appareil (5) permet d'activer un dispositif de blocage de broche lorsqu'au moins une valeur limite pour l'angle de rotation et/ou la vitesse de rotation est dépassée.

9. Machine-outil (1) permettant d'exécuter le procédé selon l'une quelconque des revendications 2, 3 ou 7, dans laquelle la machine-outil (1) présente un logement d'outil (2) pour recevoir un outil (3), ainsi qu'un moteur (4) et une électronique d'appareil (5), **caractérisé en ce que**
le moteur (4) de la machine-outil (1) peut être sollicité par un couple de rotation, dans laquelle l'électronique d'appareil (5) est conçue pour détecter un mouvement de rotation du logement d'outil (2) et pour désactiver le dispositif de blocage de broche lorsqu'un mouvement de rotation dans une deuxième direction spatiale est détecté.

10. Machine-outil (1) selon la revendication 9,
**caractérisé en ce que**
la sollicitation du moteur (4) par un couple de rotation est effectuée pendant qu'un dispositif de blocage de broche est actif.

11. Machine-outil (1) selon la revendication 9 ou 10,
**caractérisé en ce que**
la sollicitation du moteur (4) par un couple de rotation conduit au mouvement de rotation du logement d'outil (2).

12. Machine-outil (1) selon l'une quelconque des revendications 8 à 11,
**caractérisé en ce que**
la machine-outil (1) est une carotteuse.

13. Machine-outil (1) selon l'une quelconque des revendications 8 à 12,
**caractérisé en ce que**
la machine-outil (1) se passe de tout commutateur supplémentaire pour activer et/ou désactiver le dispositif de blocage de broche.
